(19) Europäisches Patentamt
European Patent Office
Office européen des brevets

(11) **EP 3 757 733 B1**

(12) **FASCICULE DE BREVET EUROPEEN**

(45) Date de publication et mention de la délivrance du brevet:
**27.10.2021 Bulletin 2021/43**

(51) Int Cl.:
***G06F 3/041*** *(2006.01)*    *G06F 3/044* *(2006.01)*

(21) Numéro de dépôt: **20180160.2**

(22) Date de dépôt: **16.06.2020**

(54) **SURFACE TACTILE À DÉTECTION TACTILE HYBRIDÉE**

TOUCH-OBERFLÄCHE MIT HYBRIDISIERTER BERÜHRUNGSERKENNUNG

TOUCH-SENSITIVE SURFACE WITH HYBRID TOUCH DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2019 FR 1906957**

(43) Date de publication de la demande:
**30.12.2020 Bulletin 2020/53**

(73) Titulaire: **THALES**
**92400 Courbevoie (FR)**

(72) Inventeurs:
• **CONI, Philippe**
**33700 MERIGNAC (FR)**
• **RENAUD, Frédéric**
**33700 MERIGNAC (FR)**
• **ABADIE, Jean-Christophe**
**33700 MERIGNAC (FR)**
• **ROUZES, Siegfried**
**33700 MERIGNAC (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2016 018 921    US-A1- 2017 123 591**
**US-A1- 2017 212 635**

EP 3 757 733 B1

**Description**

Le domaine de l'invention est celui des grands écrans tactiles réalisés en matériau conducteur transparent comportant une moyenne ou une forte résistivité.

La majorité des écrans tactiles fonctionne par détection électronique. Les écrans tactiles sont alors constitués de réseaux de lignes et de colonnes d'électrodes conductrices. La détection tactile est effectuée en injectant des signaux électriques sur les réseaux de lignes et de colonnes et en mesurant les variations des signaux de sortie provoqués par le ou les doigts de l'utilisateur au contact de l'écran tactile. Il est à noter que, dans la suite du texte, on utilisera indifféremment les termes de dalle tactile ou d'écran tactile pour désigner un dispositif comportant une surface tactile.

Dans un grand nombre d'applications, l'écran tactile est disposé sur un dispositif de visualisation pour assurer sa commande. Par conséquent, le réseau d'électrodes doit être le plus discret possible afin de ne pas perturber l'image affichée.

L'utilisation d'électrodes métalliques non transparentes, même lorsqu'elles sont très fines, créent des artefacts optiques et ne se prêtent pas facilement aux procédés de gravure, ce qui augmente leur coût. On citera, par exemple, l'utilisation de « micromeshs » ou de matériaux à base d'argent ou de carbone. Aussi, on utilise généralement, pour réaliser les électrodes, un matériau transparent de façon à limiter ces problèmes.

L'utilisation d'un matériau transparent n'est en général pas bien adaptée aux mesures analogiques qui sont sensibles à l'atténuation provoquée par la résistivité des matériaux utilisés. En effet, les matériaux transparents ont une résistivité bien supérieure aux métaux. Par exemple, l'oxyde d'Indium-Etain, connu sous l'appellation d' « ITO » signifiant « Indium Tin Oxyde » possède une bonne transparence mais a une résistivité moyenne, de l'ordre de 50 Ohms carré.

Dans le cas d'écrans tactiles, on recherche un signal provoqué par une variation capacitive de quelques femtofarads, ce qui implique une mesure à haute fréquence de l'ordre de quelques centaines de kHz.

Lorsque la ligne est résistive, cette mesure varie selon l'emplacement du point de mesure. Ainsi, si l'on mesure cette variation à l'extrémité d'une ligne transparente, la résistance de cette ligne ainsi que l'atténuation du signal sont maximales, un filtre RC de premier ordre étant constitué par la capacité C à mesurer et la résistance R de la ligne.

La sensibilité diminue donc le long d'une même colonne ou d'une même ligne au fur et à mesure que l'on s'éloigne du point d'injection du signal. La dalle tactile n'est plus uniformément sensible. Cette perte de sensibilité peut avoir de graves conséquences, comme provoquer des pertes de détection lorsque la main de l'utilisateur est gantée. Pour réduire en partie cet inconvénient, il est préférable d'injecter les signaux sur les électrodes les plus courtes, les dalles tactiles étant généralement rectangulaires.

Pour résoudre ce problème, une première solution consiste à diminuer la résistivité de la couche d'ITO en augmentant son épaisseur mais on diminue ainsi la transparence de l'écran tactile.

Une seconde solution consiste à injecter le signal de mesure des deux côtés d'une même ligne. On dispose ainsi d'un fort signal aux deux extrémités de la ligne. Cependant, cette solution à deux cotés d'injection ne fait que déporter le problème. La sensibilité reste moindre en milieu de dalle, zone qui est la plus fréquemment utilisée. De plus, cette baisse de sensibilité au centre de l'écran est accrue sur des écrans de plus grande dimension.

Enfin, cette double injection double aussi le nombre des traces ou des pistes d'accès et double également la connectique.

Ces différents inconvénients contribuent à augmenter le prix de la dalle tactile, à augmenter la taille de ses bordures, et à diminuer sa fiabilité, ce qui réduit fortement la compétitivité du produit et la valeur apportée à l'utilisateur. La demande US 2017/212635 A1 décrit un appareil tactile qui comprend un panneau tactile comportant une surface tactile et au minimum une électrode d'attaque couplée capacitivement à au moins une électrode de réception. Un circuit de détection génère un signal de réponse pour l'électrode de réception en réponse à un signal d'attaque transmis à l'électrode d'attaque. Un circuit de mesure applique une fonction de transfert variant dans le temps sur le signal de réponse. La fonction de transfert varie proportionnellement au signal de réponse, et de manière synchrone avec lui. Un circuit d'étalonnage est utilisé pour mettre en correspondance la fonction de transfert variant dans le temps et le signal de réponse. Les documents US 2017/123591 A1 et US 2016/018921 A1 décrivent des améliorations dans le domaine des appareils tactiles.

Par ailleurs, le principe de mesure a aussi son influence. Les produits actuels utilisent une méthode de transfert de charge, qui consiste à mesurer le temps de chargement d'une ligne, cette méthode est dite « Mode self » ou d'une intersection ligne/colonne, cette méthode étant appelée « Mode mutual ».

Pour réaliser ce type de mesure, on peut injecter des signaux sinusoïdaux, qui sont ensuite démodulés en amplitude, la variation d'amplitude étant proportionnelle à la capacité rapportée par l'appui réalisé par l'utilisateur. Ce type de technologie est connue sous l'appellation « tactile capacitive projeté ».

Bien qu'un peu plus complexe à intégrer dans un circuit électronique de type « ASIC », acronyme signifiant « Application-Specific Integrated Circuit », la solution fréquentielle offre un certain nombre d'avantages détaillés ci-dessous :

- Dans le domaine de la compatibilité électromagnétique, ce type de signal sinusoïdal est moins polluant qu'un signal carré. Si nécessaire, les quelques raies émises peuvent être calées hors de la bande de susceptibilité d'autres instruments électroniques ;

- Par ailleurs, la mesure d'amplitude effectuée à l'aide d'une démodulation synchrone offre une relativement bonne immunité vis à vis des perturbations.

Cependant, le grand avantage de la solution fréquentielle par rapport aux techniques utilisées avec les contrôleurs standard dits « sur étagère » ou « COTS », signifiant « Commercial Off-The-Shelf », est la possibilité d'utiliser différentes fréquences de signal.

Cet avantage a de multiples applications. Les brevets suivants en décrivent quelques-unes :

- Le brevet EP 2 535 793 intitulé « Dispositif tactile multitouches à détection capacitive multi-fréquence » décrit un dispositif tactile où l'utilisation de deux fréquences différentes permet l'élimination des appuis fantômes dans le cas d'une application « double-touche » ou « dual touch » ;

- Le brevet FR 3 009 099 intitulé « Dispositif tactile capacitif multisurface tactiles » décrit un écran tactile comprenant deux zones juxtaposées, chaque zone utilisant des fréquences différentes afin d'éviter les interférences ;

- Le brevet EP 2 793 110 intitulé «Dispositif tactile multitouches à détection capacitive multifréquence comportant des moyens de détection de panne » décrit un dispositif mettant en œuvre différentes fréquences pour la mesure de l'intégrité de la dalle et la détection de lignes coupées ;

- Le brevet FR 3 009 101 intitulé « Dispositif tactile capacitif comportant des moyens de simulations d'appui » décrit un dispositif utilisant des fréquences spécifiques pour la simulation d'appuis ;

- Le brevet EP 2 891 947 intitulé « Dongle capacitif pour dispositifs de visualisation comportant une surface tactile capacitive » décrit un dispositif de transfert de données en contact avec un écran tactile mettant en œuvre un jeu de fréquences différentes de celles de l'écran tactile.

Plus précisément, la mesure d'un appui sur une dalle tactile capacitive projetée, en mode mutuel, s'apparente à un dipôle électrique qui reçoit à son entrée un signal électrique sinusoïdal appelé « Drive » et génère à sa sortie un signal électrique modulé appelé « Sense ».

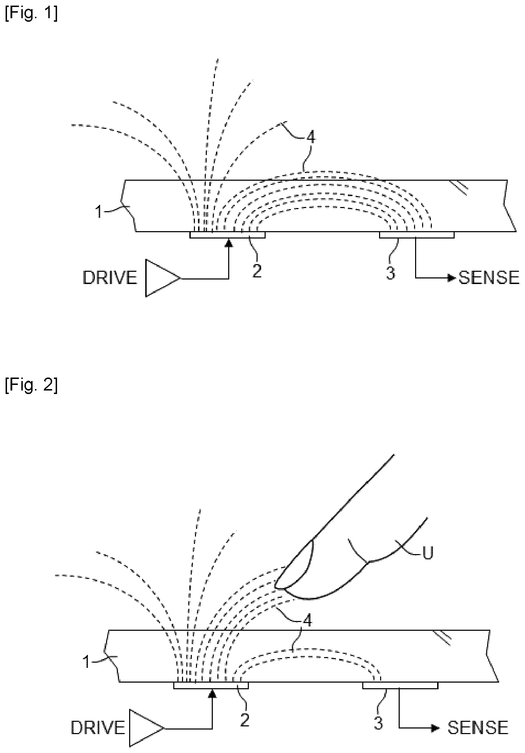

Ce principe est illustré sur les figures 1 et 2 qui représentent les variations du signal de sortie selon que le doigt U de l'utilisateur touche ou non la dalle tactile. Ces deux figures représentent une fraction simplifiée d'une dalle tactile 1 en verre comportant un réseau d'électrodes. Sur les figures 1 et 2, la fraction représentée comportent deux électrodes 2 et 3 disposées sous la dalle de verre. La première électrode 2 amène le signal d'entrée et la seconde électrode 3 conduit le signal de sortie. Les lignes 4 courbes en pointillés représentent les lignes de champ générées par le signal d'entrée.

Comme on le voit sur la figure 1, si l'utilisateur ne touche pas la dalle tactile, une partie importante des lignes de champ électrique est capté par l'électrode 3. A l'inverse, si le doigt de l'utilisateur touche la dalle tactile, ces lignes de champ sont en grande partie captées par le doigt.

En démodulant le signal de sortie en amplitude, on obtient une valeur représentative de l'appui. Le dipôle est globalement équivalent à un filtre RC série. Pour une fréquence donnée, l'atténuation du signal est d'autant plus forte que la valeur de la résistance R est élevée. Cependant, l'augmentation de la résistance provoque également une variation du déphasage entre le signal de sortie et le signal d'entrée.

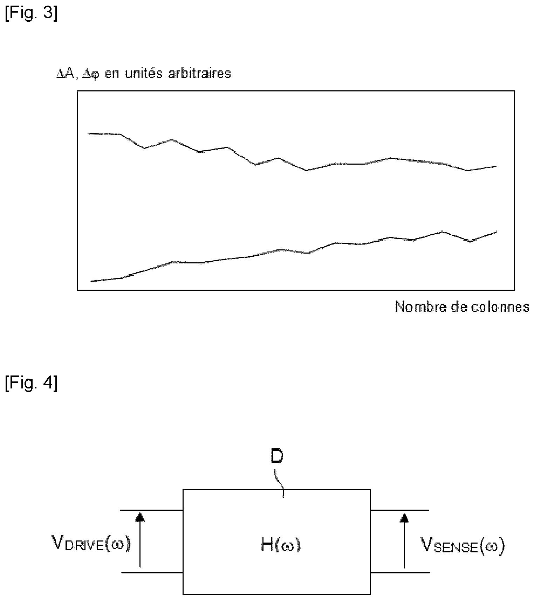

A titre d'exemple, la figure 3 représente les variations de l'atténuation du signal et du déphasage associé en fonction de l'éloignement de la colonne où l'on extrait le signal. L'atténuation $\Delta A$ et le déphasage $\Delta \varphi$ sont représentés en unités arbitraires, la courbe du déphasage est en trait fin. Comme on le voit sur cette figure, l'évolution de l'atténuation est inverse de celle du déphasage.

En mode mutual, on retrouve un signal de même nature, mais avec une atténuation de l'amplitude et un retard de phase qui varient dans les deux dimensions de la dalle tactile.

La détection du signal selon l'invention repose sur ce principe. Afin de pallier à l'atténuation du signal de sortie, fonction de l'emplacement de l'appui, au lieu d'analyser simplement l'amplitude du signal de sortie, on analyse une fonction hybride combinant l'amplitude et le déphasage du signal de sortie de telle sorte que cette fonction hybride soit invariante sur toute la longueur des lignes ou des colonnes de la dalle tactile.

Plus précisément, l'invention a pour objet une surface tactile comportant un réseau de lignes d'électrodes, des moyens d'injections sur un point d'entrée d'une ligne d'au moins une tension électrique d'entrée ($V_{DRIVE}$) sinusoïdale émise à une fréquence déterminée et d'amplitude et de phase connues, des moyens électroniques de mesure d'une tension électrique ($V_{SENSE}$) de sortie sur un second point de ladite ligne, en notant p le nombre minimal de pas du réseau séparant le premier point du second point, la partie du réseau comprise entre le premier point et le second point étant assimilable à un dipôle électrique de résistance ($R(p)$) et de capacité ($C$), la tension de sortie ($V_{SENSE}$) étant égale au produit de la tension d'entrée ($V_{DRIVE}$) par une fonction de transfert représentée par une fonction complexe ($H_{SENSE}$), caractérisé en ce que lesdits moyens de mesure comportent les moyens électroniques suivants :

- Des moyens électroniques d'extraction du gain ($G$) et de la phase ($\varphi$) de la fonction de transfert complexe ;
- Des moyens électroniques de calcul d'une fonction hybride ($S(G, \varphi)$) de ladite amplitude et de ladite phase, ladite fonction hybride minimisant la somme ($\Sigma$) telle que définie par l'équation (1) :

$$\text{Equation 1} \qquad \sum_{i \in [0,p]} \left( \frac{\delta S}{\delta R} \left( G(R_i), \varphi(R_i) \right) \right)$$

$S(G(R_i), \varphi(R_i))$ correspondant à un appui au point i de la ligne ;
- Des moyens de détermination, à partir de la valeur de la fonction hybride ($S$), si cette valeur est représentative d'un appui sur le second point de la surface tactile.

Avantageusement, l'évolution de la fonction complexe ($H_{SENSE}$) dans le plan complexe étant assimilable à une ellipse d'excentricité ($e$), la fonction hybride ($S(G, \varphi)$) est égale au produit de l'amplitude G par une fonction $k(\varphi)$ telle que définie par l'équation (2) :

$$\text{Equation 2} \qquad k(\varphi) = \sqrt{1 + \frac{e^2}{1-e^2} \sin^2 \varphi}$$

Avantageusement, les moyens électroniques d'extraction comportent :

- Un générateur de deux signaux numériques émis à la même fréquence que la tension électrique d'entrée, les deux signaux étant en quadrature ;

- Un convertisseur analogique/numérique de la tension de sortie fournissant une tension numérique échantillonnée ;

- Deux multiplicateurs assurant la multiplication de la tension numérique échantillonnée par chacun des deux signaux numériques en quadrature ;

- Deux intégrateurs assurant l'intégration sur un nombre de périodes supérieur à un des deux signaux issus des deux multiplicateurs ;

- Des moyens de calcul permettant, à partir des deux signaux intégrés précédents, de calculer le gain ($G$) et la phase ($\varphi$) de la fonction de transfert.

Avantageusement, les moyens de mesure comportent des moyens de filtrage électronique de la fonction hybride ($S(G, \varphi)$).

Les dessins annexés illustrent l'invention :

La figure 1 représente le signal de sortie dans une dalle tactile selon l'art antérieur en absence d'appui de l'utilisateur ;

La figure 2 représente le signal de sortie dans une dalle tactile selon l'art antérieur en présence d'appui de l'utilisateur ;

La figure 3 représente les variations de l'atténuation et du déphasage du signal de sortie en fonction de l'éloignement de la colonne où l'on extrait le signal dans une dalle tactile selon l'art antérieur ;

La figure 4 représente un dipôle électronique représentant une zone d'appui d'une dalle tactile selon l'invention ;

La figure 5 représente les variations de l'atténuation et du déphasage du signal de sortie dans une dalle tactile selon l'invention ;

La figure 6 représente le dipôle électronique précédent sous forme de réseau RC dans une dalle tactile selon l'invention ;

La figure 7 représente le signal hybridé en fonction de l'éloignement de la colonne où l'on extrait le signal dans une dalle tactile selon l'invention ;

La figure 8 représente un vecteur représentatif du signal de sortie avant hybridation ;

La figure 9 représente un vecteur représentatif du signal de sortie après hybridation ;

La figure 10 représente un synoptique électronique de la fonction d'extraction de l'amplitude et de la phase du signal de sortie.

La surface tactile selon l'invention comporte un réseau de lignes et de colonnes d'électrodes. La mesure de l'appui est du type « Capacitive projetée ». Elle fonctionne en mode mutuel. La pulsation des signaux d'émission est notée $\omega$. Généralement, les fréquences correspondant à cette pulsation sont comprises entre 50 kHz et 1 MHz.

A titre d'exemple non limitatif, une dalle tactile selon l'invention a une diagonale comprise entre 400 millimètres et 800 millimètres. Le pas du réseau d'électrodes est généralement compris entre 5 millimètres et 7 millimètres.

Par exemple, une dalle tactile au format 16/10 d'une hauteur de 203 millimètres et d'une longueur de 324 millimètres comporte 30 lignes et 48 colonnes au pas de 7 millimètres. La diagonale de cette dalle tactile est d'environ 400 millimètres.

La figure 4 représente un dipôle électronique D représentant une zone d'appui de la dalle tactile. Ce dipôle D a pour signal d'entrée l'injection $V_{DRIVE}(\omega)$ et comme signal de sortie la mesure $V_{SENSE}(\omega)$. Ce dipôle D est caractérisé par sa fonction de transfert $H_{SENSE}(\omega)$.

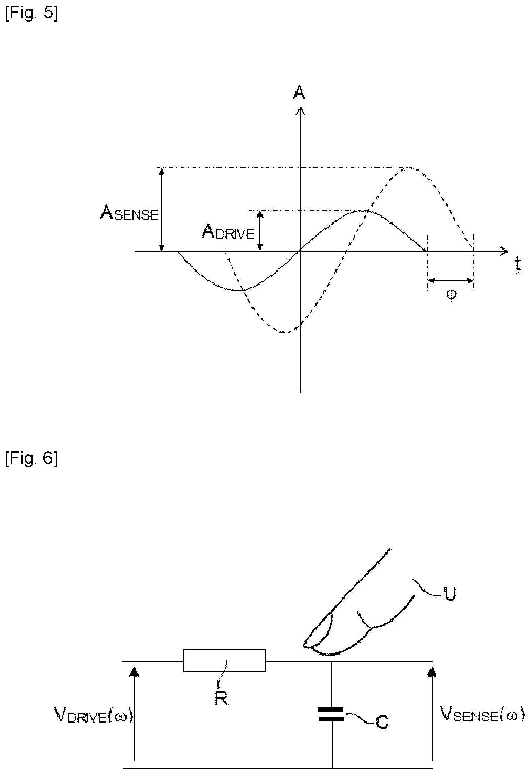

Les variations d'amplitude des signaux d'entrée et de sortie en fonction du temps sont représentées sur la figure 5. Le signal d'entrée est représenté par un trait continu et le signal de sortie est représenté par un trait en pointillés sur cette figure 5. Comme on le voit, le signal de sortie a une amplitude $A_{SENSE}$ différente de celle $A_{DRIVE}$ du signal d'entrée et il est également déphasé d'un déphasage $\varphi$. Aussi, la fonction de transfert $H_{SENSE}(\omega)$ peut s'exprimer, en notation complexe, sous la forme : $H_{SENSE}(\omega)=G_{SENSE}\cdot e^{j\varphi SENSE}$, $G_{SENSE}$ représentant le gain du dipôle correspondant au ratio des amplitudes d'entrée et de sortie et $_{\varphi SENSE}$ la phase du dipôle.

Comme on le voit sur la figure 6, on peut assimiler D à un réseau RC série, ou C est la résultante de la capacité rapportée par l'opérateur U et la capacité de couplage mutuel au niveau du point de contact et R la résistance au point de contact.

Dans ce cas, les grandeurs $G_{SENSE}$ et $\varphi_{SENSE}$ vérifient les deux équations suivantes :

$$\text{Equation 3} \qquad G_{SENSE} = \frac{1}{\sqrt{1+(\omega RC)^2}}$$

$$\text{Equation 4} \qquad \varphi_{SENSE} = \tan^{-1}(-\omega RC)$$

Dans les dispositifs de l'art antérieur, la mesure de $V_{SENSE}$ s'effectue en mesurant le temps de charge de la capacité C, par la méthode dite de transfert de charge. Seul le gain $G_{SENSE}$ du dipôle est donc mesuré. On constate d'après l'équation 3 que le gain est égal à 1 si la capacité C ou la résistance R sont nuls.

Autrement dit, en début de ligne, l'atténuation est nulle, et au fur et à mesure que l'on s'éloigne du bord de la dalle tactile, le gain diminue avec l'augmentation de la résistance R.

Les moyens de mesure de la surface tactile selon l'invention comportent un dispositif permettant d'obtenir simultanément l'amplitude et la phase du dipôle D. Au début de la ligne, la résistance est nulle, ce qui conduit à un déphasage nul. Au fur et à mesure que l'on s'éloigne du bord de la ligne, un retard de phase résulte de l'augmentation de la résistance R. Ainsi, à la différence du gain $G_{SENSE}$ qui diminue avec la résistance R, le déphasage $\varphi_{SENSE}$ augmente avec cette dernière.

Le cœur de l'invention est d'exploiter ces deux mesures et de créer une fonction hybride S(G, $\varphi$) qui en combinant le gain G et le déphasage $\varphi$ reste pratiquement invariante quel que soit la localisation du point de mesure.

Si on note p le nombre de pas du réseau séparant le premier point d'application du signal d'entrée du second point du signal de mesure, la résistance entre ces deux points étant notée R(p), la fonction S doit être telle qu'elle vérifie l'équation 1 ci-dessous :

$$\sum_{i\in[0,p]}\left(\frac{\delta S}{\delta R}\big(G(R_i),\varphi(R_i)\big)\right)$$

Equation 1

$S(G(R_i),\varphi(R_i))$ correspondant à la valeur de la fonction hybride S au point i de la ligne situé entre le premier point et le second point.

On a, par ailleurs,

$$S\big(G(0),\varphi(0)\big) = G(0)$$

La fonction S peut donc se calculer expérimentalement. S peut être au premier ordre une simple addition, mais la nature et la taille de la dalle, ainsi que les fréquences de mesures utilisées ainsi que les couplages capacitifs parasites, font que généralement, la fonction S n'est pas, au second ordre, linéaire.

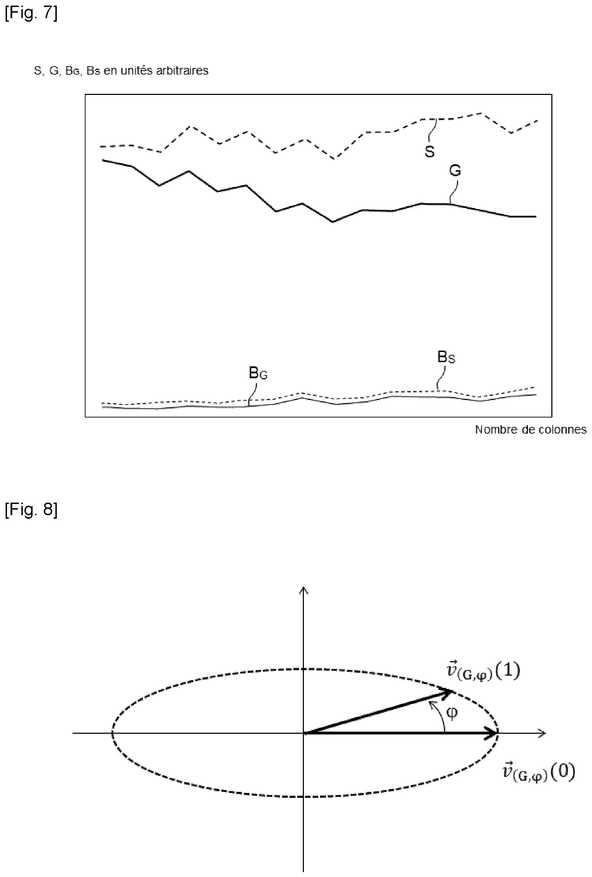

Ainsi, la figure 7 représente, en fonction de l'éloignement entre le point d'entrée et le point de mesure, le gain G, la fonction hybride S égale à la somme du gain et du déphasage correspondant, le bruit du gain $B_G$ et le bruit $B_S$ de la fonction hybride S, le gain G et son bruit associé $B_G$ sont représentés en traits continus et la fonction hybride S et son bruit associé $B_S$ en traits pointillés.

Comme on le voit sur la figure 7, le signal, ainsi hybridé, n'est plus atténué le long de la ligne, il a même tendance à augmenter. Par contre, le bruit augmente également. Par conséquent, il est préférable d'avoir recours à un modèle non linéaire intégrant le bruit.

L'évolution du gain G et du déphasage $\varphi$ en cas d'appui le long de la dalle est assimilable à un comportement vectoriel elliptique. Si l'on note $\vec{v}_{(G,\varphi)}$ le vecteur dont les coordonnées polaire sont G et $\varphi$ et dont l'affixe est donc le nombre complexe $Ge^{i\varphi}$, alors on constate qu'étant donné la valeur maximale du déphasage $\varphi$, on peut donner une bonne approximation de l'évolution spatiale de ce vecteur le long de la dalle par le début d'une ellipse : la figure 8 représente une ellipse de ce type. La flèche horizontale représente le vecteur $\vec{v}_{(G,\varphi)}(0)$ en début de dalle tactile et la flèche inclinée représente le vecteur $\vec{v}_{(G,\varphi)}(1)$ en fin de dalle tactile.

L'affixe de $\vec{v}_{(G,\varphi)}(0)$ vaut $G_{MAX}.e^{i0}$ et l'affixe de $\vec{v}_{(G,\varphi)}(1)$ vaut $G_{MIN}.e^{i\varphi MAX}$.

La longueur du grand axe de l'ellipse est donnée par la valeur maximale du gain G, atteinte en début de dalle et son excentricité e est identifiée par des mesures effectuées le long de la dalle.

L'objectif de la fonction hybride est de maintenir constante la valeur maximale du gain G, donc de modifier la norme de $\vec{v}_{(G,\varphi)}$ pour l'amener sur la longueur du grand axe. De manière exacte, on doit donc remplacer G par la fonction hybride S(G, $\varphi$) qui vaut, dans le cas présent, G.k($\varphi$) avec :

$$k(\varphi) = \sqrt{1 + \frac{e^2}{1-e^2}sin^2\varphi}$$

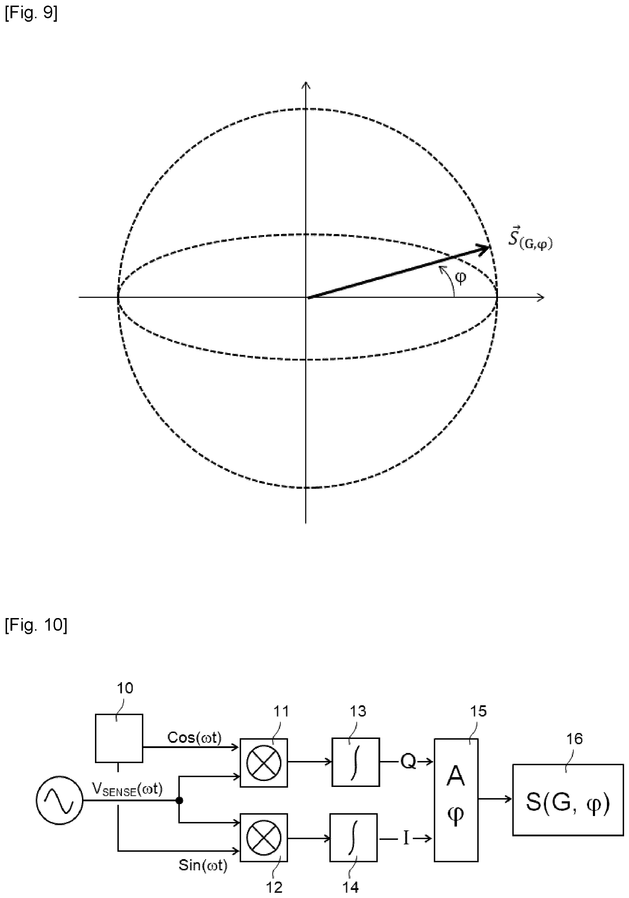

Dans ce cas, si l'on représente la fonction hybride S(G, $\varphi$) avec la même notation vectorielle que précédemment, cette fonction S décrit une portion de cercle comme on le voit sur la figure 9. Le rayon du cercle vaut $G_{MAX}$.

La prise en compte du bruit, et en particulier la corrélation entre le bruit sur le gain G et le bruit sur le déphasage $\varphi$, peut être traitée suite à la mesure de ces bruits et la détermination de leurs caractéristiques spectrale et d'amplitude dans le but de réduire de façon optimale le bruit du produit G.k($\varphi$). A titre d'exemple, ce traitement peut consister en un filtrage adapté ou une désadaptation temporelle.

Les moyens électroniques de calcul de la surface tactile doivent donc être en mesure, à partir de la connaissance du signal de sortie $V_{SENSE}(\omega)$, d'extraire son amplitude et à sa phase. A partir de ces deux informations, on peut calculer le gain G puis la fonction hybride S.

La mesure de l'amplitude et de la phase ne pose pas de problèmes particuliers à l'homme du métier. A titre d'exemple, le synoptique de la figure 10 représente un mode de réalisation électronique de cette fonction d'extraction. Cette fonction électronique comporte :

- Un convertisseur analogique/numérique de la tension de sortie fournissant une tension numérique échantillonnée. Ce convertisseur n'est pas représenté sur la figure 10. Le nombre d'échantillons doit couvrir plusieurs périodes de la pulsation $\omega$ ;

- Un générateur 10 de deux signaux numériques émis à la même pulsation ω que la tension électrique $V_{SENSE}$, les deux signaux étant en quadrature. Ces signaux sont représentés par les fonctions Cos(ωt) et Sin(ωt) sur la figure 10 ;

- Deux multiplicateurs 11 et 12 assurant la multiplication de la tension numérique échantillonnée par chacun des deux signaux numériques en quadrature ;

- Deux intégrateurs 13 et 14 assurant l'intégration sur un nombre de périodes supérieur à un les deux signaux issus des deux multiplicateurs 11 et 12. Le premier signal de sortie issu du premier intégrateur est noté Q et le second signal de sortie est noté I ;

- Des moyens de calcul 15 permettant, à partir des deux signaux intégrés précédents, de calculer l'amplitude (A) et la phase (φ) du signal d'entrée $V_{SENSE}$ selon les formules suivantes :

$$A = \sqrt{I^2 + Q^2} \text{ et } \varphi = \tan^{-1}\left(\frac{I}{Q}\right)$$

Connaissant l'amplitude et la phase du signal de sortie, il est alors facile de déterminer le gain G, puis la fonction hybride S(G, φ).

Les avantages des moyens de mesure selon l'invention sont importants. En effet, la fonction hybride permet d'obtenir un signal uniquement représentatif d'un appui, sans être dépendant de la composante résistive de la dalle.

On peut ainsi utiliser toute la surface de la dalle tactile avec des gants sans perte de détection des appuis.

Cette solution permet d'utiliser des dalles tactiles standards en évitant l'adressage des deux côtés de la dalle. Elle permet l'usage de matériaux conducteurs transparent à faible coût comme l'ITO.

De plus, l'hybridation permet de réduire le bruit de mesure de façon quadratique, tandis que le signal est augmenté de la valeur de la phase, ce qui donne une possibilité d'augmenter le rapport signal/bruit de 6 dB.


## Revendications

1.   Surface tactile (1) comportant un réseau de lignes d'électrodes (2, 3), des moyens d'injections sur un point d'entrée d'une ligne d'au moins une tension électrique d'entrée ($V_{DRIVE}$) sinusoïdale émise à une fréquence déterminée et d'amplitude et de phase connues, des moyens électroniques de mesure d'une tension électrique ($V_{SENSE}$) de sortie sur un second point de ladite ligne, en notant p le nombre minimal de pas du réseau séparant le premier point du second point, la partie du réseau comprise entre le premier point et le second point étant assimilable à un dipôle électrique de résistance (R(p)) et de capacité (C), la tension de sortie ($V_{SENSE}$) étant égale au produit de la tension d'entrée ($V_{DRIVE}$) par une fonction de transfert représentée par une fonction complexe ($H_{SENSE}$), **caractérisé en ce que** lesdits moyens de mesure comportent les moyens électroniques suivants :

   - Des moyens électroniques d'extraction du gain (G) et de la phase (φ) de la fonction de transfert complexe ;
   - Des moyens électroniques de calcul d'une fonction hybride (S(G, φ)) de ladite amplitude et de ladite phase, ladite fonction hybride minimisant la somme (Σ) telle que définie par l'équation (1) :

$$\text{Equation 1} \qquad \sum_{i \in [0,p]} \left( \frac{\delta S}{\delta R}\left(G(R_i), \varphi(R_i)\right) \right)$$

   $S(G(R_i), \varphi(R_i))$ correspondant à un appui au point i de la ligne ;
   - Des moyens de détermination, à partir de la valeur de la fonction hybride (S), si cette valeur est représentative d'un appui sur le second point de la surface tactile.

2.   Surface tactile selon la revendication 1, **caractérisé en ce que** l'évolution de la fonction complexe ($H_{SENSE}$) dans le plan complexe étant assimilable à une ellipse d'excentricité (e), la fonction hybride (S(G, φ)) est égale au produit de l'amplitude G par une fonction k(φ) telle que définie par l'équation (2) :

$$\text{Equation 2} \qquad k(\varphi) = \sqrt{1 + \frac{e^2}{1-e^2} sin^2 \varphi}$$

**3.** Surface tactile selon l'une des revendications précédentes, **caractérisé en ce que** les moyens électroniques d'extraction comportent :

- Un générateur (10) de deux signaux numériques émis à la même fréquence que la tension électrique d'entrée, les deux signaux étant en quadrature ;
- Un convertisseur analogique/numérique de la tension de sortie fournissant une tension numérique échantillonnée ;
- Deux multiplicateurs (11, 12) assurant la multiplication de la tension numérique échantillonnée par chacun des deux signaux numériques en quadrature ;
- Deux intégrateurs (13, 14) assurant l'intégration sur un nombre de périodes supérieur à un des deux signaux issus des deux multiplicateurs ;
- Des moyens de calcul (15) permettant, à partir des deux signaux intégrés précédents, de calculer le gain (G) et la phase (φ) de la fonction de transfert.

**4.** Surface tactile selon l'une des revendications précédentes, **caractérisé en ce que** les moyens de mesure comportent des moyens de filtrage électronique de la fonction hybride (S(G, φ)).


**Patentansprüche**

**1.** Touch-Oberfläche (1), umfassend ein Netzwerk von Elektrodenleitungen (2, 3), Injektionsmittel an einem Eingangspunkt einer Leitung von mindestens einer sinusförmigen elektrischen Eingangsspannung ($V_{DRIVE}$), welche mit einer bestimmten Frequenz mit bekannter Amplitude und Phase ausgesendet wird, elektronische Messmittel einer elektrischen Ausgangsspannung ($V_{SENSE}$) an einem zweiten Punkt der Leitung, wobei p die minimale Anzahl an Schritten des Netzwerks bezeichnet, welche den ersten Punkt vom zweiten Punkt trennt, wobei der Teil des Netzwerks, welcher zwischen dem ersten Punkt und dem zweiten Punkt umfasst ist, mit einem elektrischen Dipol mit einem Widerstand (R(p)) und einer Kapazität (C) gleichgesetzt werden kann, wobei die Ausgangsspannung ($V_{SENSE}$) gleich dem Produkt der Eingangsspannung ($V_{DRIVE}$) mit einer Transferfunktion ist, welche durch eine komplexe Funktion ($H_{SENSE}$) dargestellt wird, **dadurch gekennzeichnet, dass** die Messmittel folgende elektronische Mittel umfassen:

- elektronische Mittel zur Extraktion der Verstärkung (G) und der Phase (φ) aus der komplexen Transferfunktion;
- elektronische Berechnungsmittel einer hybriden Funktion (S(G, φ)) der Amplitude und der Phase, wobei die hybride Funktion die durch die Gleichung (1) definierte Summe (Σ) minimiert:

$$\text{Gleichung 1} \qquad \sum_{i \in [0,p]} \left( \frac{\delta S}{\delta R} \big( G(R_i), \varphi(R_i) \big) \right)$$

wobei S(G($R_i$), φ($R_i$)) einer Auflage am Punkt i der Leitung entspricht;
- Mittel zur Bestimmung, anhand des Wertes der hybriden Funktion (S), ob dieser Wert eine Auflage auf dem zweiten Punkt der Touch-Oberfläche darstellt.

**2.** Touch-Oberfläche nach Anspruch 1, **dadurch gekennzeichnet, dass**, da die Entwicklung der komplexen Funktion ($H_{SENSE}$) in der komplexen Ebene mit einer Exzentrizitäts-Ellipse (e) gleichgesetzt werden kann, die hybride Funktion (S(G, φ)) gleich dem Produkt der Amplitude G mit einer Funktion k(φ) wie in der Gleichung (2) definiert ist:

$$\text{Gleichung 2} \qquad k(\varphi) = \sqrt{1 + \frac{e^2}{1 - e^2} sin^2 \varphi}$$

**3.** Touch-Oberfläche nach einem der vorhergehenden Ansprüche, **dadurch gekennzeichnet, dass** die elektronischen Extraktionsmittel Folgendes umfassen:

- einen Generator (10) zweier digitalen Signale, welche mit derselben Frequenz wie die elektrische Eingangsspannung ausgesandt werden, wobei die beiden Signale Quadratursignale sind;

- einen Analog-/Digitalkonverter der Ausgangsspannung, welcher eine abgetastete digitale Spannung bereitstellt;
- zwei Multiplikatoren (11, 12), welche die Multiplikation der digitalen abgetasteten Spannung mit jedem der beiden digitalen Quadratursignale sicherstellen;
- zwei Integratoren (13, 14), welche die Integration über eine Anzahl von Perioden sicherstellen, welche eines der beiden aus den beiden Multiplikatoren stammenden Signale überschreitet;
- Berechnungsmittel (15), welche es anhand der beiden vorhergehenden integrierten Signale ermöglichen, die Verstärkung (G) und die Phase ($\varphi$) der Transferfunktion zu berechnen.

4.  Touch-Oberfläche nach einem der vorhergehenden Ansprüche, **dadurch gekennzeichnet, dass** die Messmittel elektronische Filtermittel der Hybridfunktion (S(G, $\varphi$)) umfassen.

**Claims**

1.  A touch-sensitive surface (1) comprising an array of electrode leads (2, 3), means for injecting, at an input point of a lead of at least one sinusoidal input electric voltage ($V_{DRIVE}$), said voltage being transmitted at a determined frequency and having a known amplitude and phase, electronic means for measuring an output electric voltage ($V_{SENSE}$) at a second point of said lead, with p denoting the minimum number of steps of the array separating the first point from the second point, the portion of the array comprised between the first point and the second point being comparable to an electric dipole of resistance (R(p)) and capacitance (C), the output voltage ($V_{SENSE}$) being equal to the product of the input voltage ($V_{DRIVE}$) with a transfer function represented by a complex function ($H_{SENSE}$), **characterised in that** said measurement means comprise the following electronic means:

    - electronic means for extracting the gain (G) and the phase ($\varphi$) from the complex transfer function;
    - electronic means for computing a hybrid function (S(G, $\varphi$)) of said amplitude and of said phase, said hybrid function minimising the sum ($\Sigma$) as defined by the following equation (1):

$$\text{Equation 1} \qquad \sum_{i \in [0,p]} \left( \frac{\delta S}{\delta R} \left( G(R_i), \varphi(R_i) \right) \right) ,$$

with $S(G(R_i),(\varphi(R_i))$ corresponding to a touch at point i of the lead;
    - means for determining, on the basis of the value of the hybrid function (S), whether this value represents a touch on the second point of the touch-sensitive surface.

2.  The touch-sensitive surface as claimed in claim 1, **characterised in that**, with the evolution of the complex function ($H_{SENSE}$) in the complex plane being comparable to an ellipse of eccentricity (e), the hybrid function (S(G, $\varphi$)) is equal to the product of the amplitude G with a function k($\varphi$) as defined by the following equation (2):

$$\text{Equation 2} \qquad k(\varphi) = \sqrt{1 + \frac{e^2}{1-e^2} sin^2 \varphi}$$

3.  The touch-sensitive surface as claimed in any one of the preceding claims, **characterised in that** the electronic extraction means comprise:

    - a generator (10) for generating two digital signals transmitted at the same frequency as the electric input voltage, the two signals being in quadrature;
    - an analogue/digital converter for converting the output voltage supplying a sampled digital voltage;
    - two multipliers (11, 12) providing the multiplication of the sampled digital voltage by each of the two digital signals in quadrature;
    - two integrators (13, 14) providing the integration over a number of periods that is greater than one of the two signals originating from the two multipliers;
    - computation means (15) allowing, on the basis of the two preceding integrated signals, the gain (G) and the phase ($\varphi$) of the transfer function to be computed.

4. The touch-sensitive surface as claimed in any one of the preceding claims, **characterised in that** the measurement means comprise means for electronically filtering the hybrid function (S(G, φ)).

[Fig. 1]

[Fig. 2]

[Fig. 3]

ΔA, Δφ en unités arbitraires

Nombre de colonnes

[Fig. 4]

[Fig. 5]

[Fig. 6]

[Fig. 7]

S, G, BG, Bs en unités arbitraires

Nombre de colonnes

[Fig. 8]

[Fig. 9]

[Fig. 10]

# EP 3 757 733 B1

## RÉFÉRENCES CITÉES DANS LA DESCRIPTION

**Documents brevets cités dans la description**

- US 2017212635 A1
- US 2017123591 A1
- US 2016018921 A1
- EP 2535793 A
- FR 3009099
- EP 2793110 A
- FR 3009101
- EP 2891947 A